# EUROPEAN PATENT SPECIFICATION

(11) **EP 0 405 635 B1**
(45) Date of publication and mention of the grant of the patent: **27.10.1993**
(21) Application number: 90201524.7
(22) Date of filing: 13.06.1990
(51) Int. Cl.: B60H 1/24

(54) **Aeration ducts for motor vehicle side windows**
Belüftungsleiste für Kraftfahrzeugseitenfenster
Conduit d'aération pour fenêtre latérale d'un véhicule automobile

(30) Priority: 26.06.1989 IT 2098889
(43) Date of publication of application: 02.01.1991
(73) Proprietor: FIAT AUTO S.p.A., 10135 Torino (IT)
(72) Inventor: Villa, Ezio, I-20020 Arese, Milan (IT)
(74) Representative: Fusina, Gerolamo

(56) References cited:
- DE-A- 2 130 571
- DE-C- 950 110
- FR-A- 2 472 991
- US-A- 2 133 488
- US-A- 2 146 826
- US-A- 2 176 143

## Description

This invention relates to aeration ducts for motor vehicle side windows, and more particularly to high-efficiency ducts connected to and fed by a vehicle heating and ventilation system.

There are various known methods of arranging aeration ducts for motor vehicle passenger compartments, but they generally ignore the requirement for proper aeration of the upper rear regions of the side windows. This results in a reduction of side visibility, especially if condensation occurs, so compelling the driver to correct this manually.

Some vehicles are for example provided with ducts which extend along the inside of the vehicle to convey the air into the space between the metal part of the roof panel and its inner porous material lining. This arrangement obviously cannot sufficiently and effectively aerate the side windows because most of the air stream is diffused uniformly within the passenger compartment. Other vehicles are provided with an arrangement of transverse ducts in a central region of the roof panel, within the passenger compartment. These ducts substantially divide the passenger compartment into a front section and a rear section, and are connected together by a further duct which runs within the roof lining and uprights to an air conditioning or ventilation system. Even this ducting arrangement does not solve the side window aeration problem, as the transversely arranged ventilation apertures serve, in cooperation with the normal vents, only to create a more uniform flow within the passenger compartment in the two sections defined by said transverse ducts.

Other methods comprise feeding an aeration flow to the side window through a suitable upwardly facing vent provided on the door in proximity to the front upright and connected to the heating and ventilation system. Because of the small vent dimensions and the low air flow, this method is generally used to provide an air flow only to a corner portion of the window rather than to its entire surface.

As a more simple approach, in other vehicles the front lateral vents are directional and can be positioned to feed an air flow against the side windows, but even this method is only partly effective, as in the case just described. The DE-950 110 discloses an aeration duct for a motor vehicle having a double roof aimed at defrosting or demisting windows. The aeration duct is provided with a plurality of apertures above the side windows. The front uprights are used to transport the air towards the roof and said apertures above the side windows in the lower roof provide an air flow against the windows.

An object of the present invention is to obviate the drawbacks of the known art by providing an arrangement for distributing air to the most suitable regions of motor vehicle side windows which uses linear ducts of low pressure drop.

A further object of the invention is, simultaneously with the obtaining of low pressure drops, to minimize the heat inleak to the air flowing through the provided ducting.

These objects are attained by aeration ducts for the side windows of a motor vehicle in accordance with claim 1.

Further according to the present invention said uprights and said edge section of said roof panel have different cross-sections. In addition, said profiled cover strip has different cross-sections at said uprights and at said edge section of said roof panel.

In particular, along one of said uprights, said cover strip has an essentially C-shaped cross-section, whereas along said edge section it has an essentially L-shaped cross-section.

The characteristics and further advantages of the present invention will be more apparent from the non-limiting description given hereinafter with reference to the accompanying drawings in which:
Figure 1 is a perspective schematic view of ducts according to the invention as seen from the interior of a motor vehicle;
Figure 2 is a front elevational view of a detail of Figure 1;

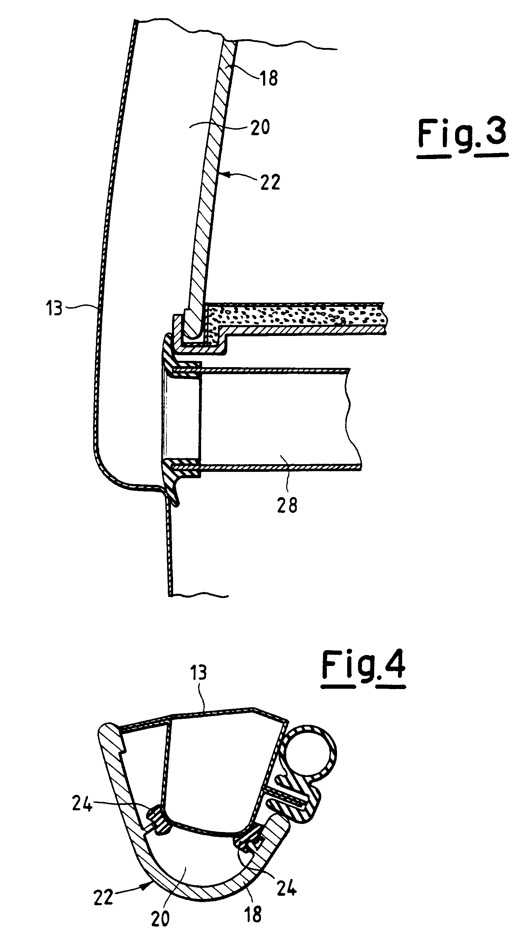

Figure 3 is a section on the line III-III of Figure 1;
Figure 4 is a section on the line IV-IV of Figure 1; and

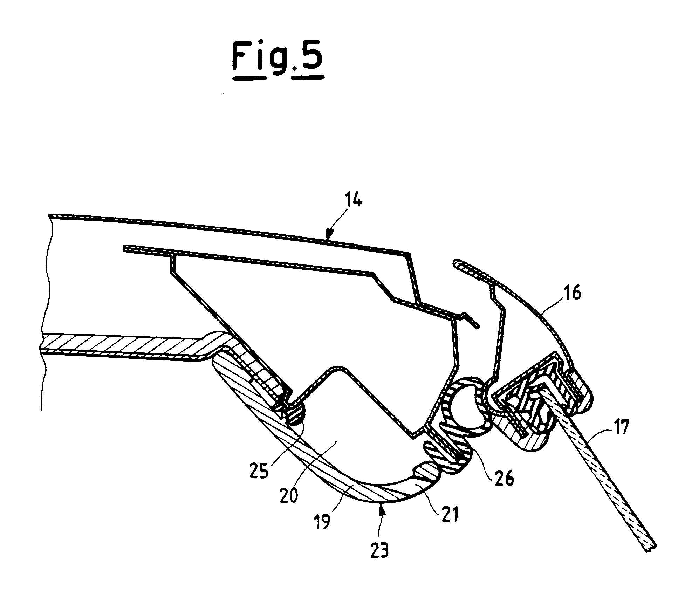

Figure 5 is a section on the line V-V of Figure 1.

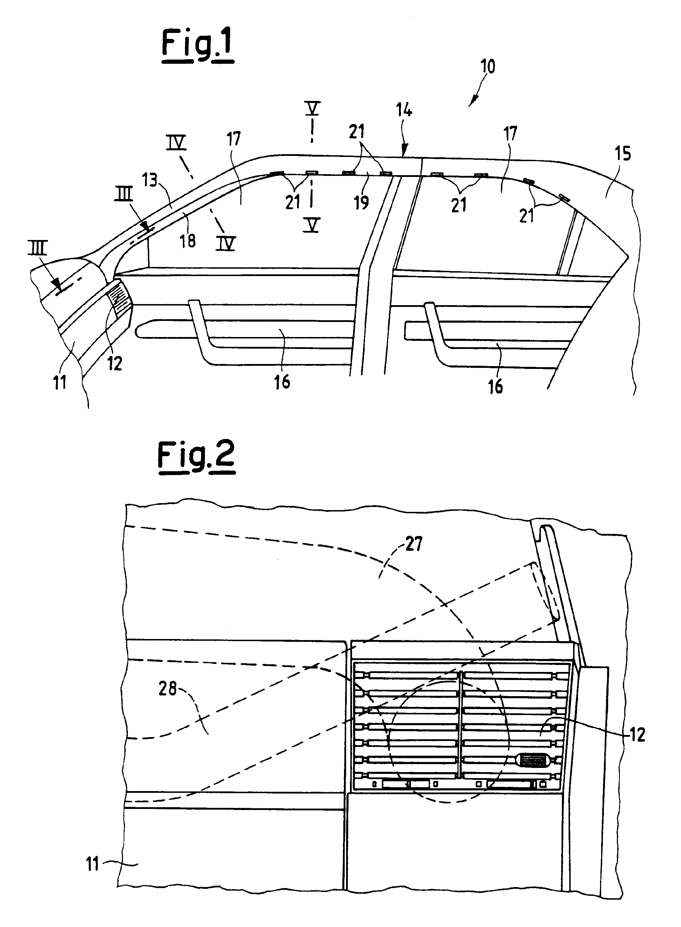

In the figures the reference numeral 10 indicates overall a schematic portion of a vehicle as seen from its interior, in which 11 indicates a frontal dashboard provided laterally with aeration vents 12. There are also shown, in particular in Figure 1, a front upright 13 for a roof panel 14 and a respective rear upright 15, and, shown schematically between the front upright 13 and rear upright 15, below the roof panel, doors 16 provided with respective side windows 17.

A profiled cover strip 18 is fixed to the passenger compartment interior along the front upright 13, along an edge section 19 of the roof panel 14 and along the rear upright 15 in a manner cooperating with them.

In the interior of the dashboard 11 there are provided pipes 27 and 28 connected to a vehicle heating and ventilation system (not shown), these pipes respectively feeding aeration vents 12 provided in the dashboard, and ducts 20 defined by the uprights 13 and 15 and edge section 19 of the roof panel, in cooperation with the cover strip 18 associated with them.

The strip 18 is also provided along its length with a plurality of apertures 21 arranged spaced apart in groups of two or three in positions corresponding with the side windows 17. The apertures 21 are shaped and orientated to direct an air stream uniformly over the entire surface of the windows 17. The cross-section of the strip 18 is essentially of C-shape and indicated by 22 where associated with the front upright, whereas it assumes an essentially L-shaped cross-section, indicated by 23, in the region in which it is associated with edge section 19 of the roof panel. In this respect, along the upright 13 the cross-section of the duct 20 is essentially of circular sector shape, whereas along the edge section of the roof panel the cross-section of the duct 20 assumes a substantially rectangular mixed-dine shape.

To ensure that the ducts 20 are pneumatically sealed, there are provided gaskets 24 between the cover strip 18 and upright 13, and, in the region in which the cover strip 18 is associated with the edge section 19 of the roof panel, a gasket 25 in collaboration with a seal gasket 26 for the vehicle door 16.

In this manner, and with this arrangement, the hot or cold air produced by the heating and ventilation system and fed into the ducts 20 passes through the rising duct portion formed between the upright 13 and the cover strip 18 to reach the region comprising said strip 18, which cooperates with the edge section 19 of the roof panel. In positions corresponding with the side windows 17, this region comprises the groups of apertures 21, from which the (hot or cold) air is free to emerge at sufficient pressure to uniformly graze the entire surface of the windows 17.

Using this arrangement, the pressure drop through the ducts is low and the required shapes and construction of the cover strip 18 and the roof panel edge section 19 are not such as to seriously affect the vehicle construction cost, so making the arrangement. particularly convenient.

## Claims

1. Aeration ducts for the side windows of a motor vehicle in which there is provided a heating and ventilation unit connected to the interior of the passenger compartment of said vehicle by a plurality of pipes (27,28) feeding aeration vents (12) provided on a dashboard (11) and also feeding the ducts (20), further having a plurality of apertures above side windows (7) arranged in a way to provide aeration from the interior of said motor vehicle to said side windows (17) located below them, where said aeration ducts (20) are ducts rising from the dashboard (11) towards a roof panel (14) of said vehicle and originate in positions corresponding with a base region of uprights (13,15) of said panel (14), characterised in that said ducts (20) originating from the dashboard (11) towards the roof panel (14) are defined by an outer surface of the front upright (13) and a profiled cover strip (18) extending from said base of the front up-right (13) to the rear upright (15), the ducts (20) leading from the front upright (13) to the rear upright (15) being defined by an edge (29) of the roof panel (14), an outer surface of the upper part of the rear upright (15) and by the profiled cover strip (18), said cover strip (18) being provided with a plurality of spaced-apart apertures (21) distributed along its length.

2. Aeration ducts as claimed in claim 1, characterised in that said uprights and said roof panel edge section are of different cross-sections.

3. Aeration ducts as claimed in claim 1, characterised in that said profiled cover strip (18) is of different cross-section along said uprights (13, 15) and along said roof panel edge section (19).

4. Aeration ducts as claimed in claim 3, characterised in that along one of said uprights (13, 15), said cover strip (18) has an essentially C-shaped cross-section (22).

5. Aeration ducts as claimed in claim 3, characterised in that along said roof panel edge section (19), said cover strip (18) has an essentially L-shaped cross-section (23).

6. Aeration ducts as claimed in claim 1, characterised in that gaskets (25) are interposed between the cover strip (18) and upright (13) to seal said ducts (20).

7. Aeration ducts as claimed in claim 1, characterised in that seal gaskets (24) are interposed between said cover strip (18) and said roof panel edge section (19), at least one of said gaskets (24) being part of a gasket (26) of the vehicle door (16).

8. Aeration ducts as claimed in claim 1, characterised in that said spaced apertures (21) are arranged in groups of two or three in correspondence with said side windows (17).

9. Aeration ducts as claimed in claim 1, characterised in that said spaced apertures (21) are shaped and orientated in such a manner as to direct a uniform air flow over the entire surface of said side windows (17).

10. Aeration ducts as claimed in claim 1, characterised in that the cross-section of said duct (20) along said upright (13) is essentially of circular sector shape.

11. Aeration ducts as claimed in claim 1, characterised in that the cross-section of said duct (20) along said roof panel edge section (19) substantially of mixed-line rectangular shape.

## Patentansprüche

1. Belüftungsleiste für Kraftfahrzeug-Seitenfenster, wobei das Kraftfahrzeug mit einer Heizungs- und Belüftungsvorrichtung versehen ist, die über mehrere, im Armaturenbrett (11) angeordnete Belüftungsöffnungen (12) und über Belüftungsleitungen (20) und über Rohrleitungen (27, 28) mit dem Fahrgastraum verbunden ist sowie mit mehreren, oberhalb der Fenster (17) zur Erzeugung eines Luftstromes aus dem Inneren des Kraftfahrzeuges zu den unter ihnen angeordneten Fenstern (17) angeordneten Öffnungen und wobei die Belüftungsleitungen (20) Leitungen sind, die vom Armaturenbrett (11) aus auf das Fahrzeugdach (14) zu führen und ihren Anfang an Stellen haben, die den Basisabschnitten der Dachsäulen (13, 15) des Daches (14) entsprechen,
dadurch **gekennzeichnet**, daß die Belüftungsleitungen (20), die vom Armaturenbrett (11) auf das Fahrzeugdach (14) zuführen, durch die Außenseite der vorderen Dachsäule (13) gebildet werden sowie durch einen profilierten Deckstreifen (18), der sich von der Basis der vorderen Dachsäule (13) aus bis zur hinteren Dachsäule (15) erstreckt, wobei die Belüftungsleitungen (20), die von der vorderen Dachsäule (13) zur hinteren Dachsäule (15) führen, durch eine Kante (29) des Fahrzeugdaches (14) gebildet werden und durch die Außenseite des oberen Teiles der hinteren Dachsäule (15) sowie durch einen profilierten Deckstreifen (18), der seinerseits mit mehreren, im Abstand angeordneten Öffnungen (21) versehen ist, die auf seiner Länge verteilt sind.

2. Belüftungsleiste nach Anspruch 1, dadurch gekennzeichnet, daß die Dachsäulen und der Kantenabschnitt des Fahrzeugdaches verschiedene Querschnitte haben.

3. Belüftungsleiste nach Anspruch 1, dadurch gekennzeichnet, daß der profilierte Deckstreifen (18) längs der Dachsäulen (13, 15) und längs des Kantenabschnittes (19) des Fahrzeugdaches einen verschiedenen Querschnitt aufweist.

4. Belüftungsleiste nach Anspruch 3, dadurch gekennzeichnet, daß der Deckstreifen (18) längs von einem der Dachsäulen (13, 15) einen im wesentlichen C-förmigen Querschnitt (22) hat.

5. Belüftungsleiste nach Anspruch 3, dadurch gekennzeichnet, daß der Deckstreifen (18) längs des Kantenanschnittes (19) des Fahrzeugdaches einen im wesentlichen L-förmigen Querschnitt (23) hat.

6. Belüftungsleiste nach Anspruch 1, dadurch gekennzeichnet, daß zwischen dem Deckstreifen (18) und der Dachsäule (13) Dichtungen (25) angeordnet sind, um die Belüftungsleitungen (20) abzudichten.

7. Belüftungsleiste nach Anspruch 1, dadurch gekennzeichnet, daß die Dichtung (24) zwischen dem Deckstreifen (18) und dem Kantenabschnitt (19) des Fahrzeugdaches liegt, wobei wenigstens eine der Dichtungen (24) ein Teil der Dichtung (26) der Fahrzeugtür (16) ist.

8. Belüftungsleiste nach Anspruch 1, dadurch gekennzeichnet, daß die im Abstand voneinander angeordneten Öffnungen (21) entsprechend den Seitenfenstern (17) in Gruppen zu zweit oder zu dritt angeordnet sind.

9. Belüftungsleiste nach Anspruch 1, dadurch gekennzeichnet, daß die im Abstand voneinander angeordneten Öffnungen (21) so geformt und gerichtet sind, daß sie eine gleichmäßige Luftströmung über die gesamte Fläche der Seitenfenster (17) hinweg erzeugen.

10. Belüftungsleiste nach Anspruch 1, dadurch gekennzeichnet, daß der Querschnitt der Belüftungsleitung (20) längs der Dachsäule (13) im wesentlichen eine Kreissektorform hat.

11. Belüftungsleiste nach Anspruch 1, dadurch gekennzeichnet, daß der Querschnitt der Belüftungsleitung (20) längs des Kantenabschnittes (19) des Fahrzeugdaches eine aus verschiedenen Linien zusammengesetzte, im wesentlichen rechteckige Form hat.

## Revendications

1. Conduits d'aération pour les fenêtres latérales d'un véhicule à moteur dans lequel est prévu une unité de chauffage et de ventilation reliée à l'intérieur du compartiment passager dudit véhicule par plusieurs gaines (27, 28) alimentant des bouches d'aération (12) prévues sur un tableau de bord (11) et alimentant également les conduits (20), ayant en outre plusieurs ouvertures au-dessus des fenêtres latérales (17) disposées de façon à procurer une aération de l'intérieur dudit véhicule à moteur vers lesdites fenêtres latérales (17) situées sous elles, lesdits conduits d'aération (20) étant des conduits montant du tableau de bord (11) en direction d'un panneau de toit (14) dudit véhicule et partant de positions correspondant à une zone de base des montants (13, 15) dudit panneau (14), caractérisés en ce que lesdits conduits (20) partant du tableau de bord (11) en direction du panneau de toit (14) sont définis par une surface extérieure du montant avant (13) et une bande de recouvrement profilée (18) s'étendant depuis ladite base du montant avant (13) jusqu'au montant arrière (15), les conduits (20) allant du montant avant (13) jusqu'au montant arrière (15) étant définis par un bord (29) du panneau de toit (14), une surface extérieure de la partie supérieure du montant arrière (15) et par la bande de recouvrement profilée (18), ladite bande de recouvrement (18) étant pourvue d'ouvertures espacées (21) réparties sur sa longueur.

2. Conduits d'aération selon la revendication 1, caractérisés en ce que lesdits montants et ladite section de bord de panneau de toit sont de sections différentes.

3. Conduits d'aération selon la revendication 1, caractérisés en ce que ladite bande de recouvrement profilée (18) est d'une section différente le long desdits montants (13, 15) et le long de ladite section de bord de panneau de toit (19).

4. Conduits d'aération selon la revendication 3, caractérisés en ce que, le long d'un desdits montants (13, 15), ladite bande de recouvrement (18) a une section essentiellement en forme de C (22).

5. Conduits d'aération selon la revendication 3, caractérisés en ce que, le long de ladite section de bord de panneau de toit (19), ladite bande de recouvrement (18) a une section essentiellement en forme de L (23).

6. Conduits d'aération selon la revendication 1, caractérisés en ce que des joints (25) sont interposés entre la bande de recouvrement (18) et le montant (13) afin d'assurer l'étanchéité desdits conduits (20).

7. Conduits d'aération selon la revendication 1, caractérisés en ce que des joints d'étanchéité (24) sont interposés entre ladite bande de recouvrement (18) et ladite section de bord de panneau de toit (19), au moins un desdits joints (24) faisant partie d'un joint (26) de la porte de véhicule (16).

8. Conduits d'aération selon la revendication 1, caractérisés en ce que lesdites ouvertures espacés (21) sont disposées en groupe de deux ou trois en correspondance avec lesdites fenêtres latérales (17).

9. Conduits d'aération selon la revendication 1, caractérisés en ce que lesdites ouvertures espacés (21) sont conformées et orientées de manière à diriger un écoulement d'air uniforme sur toute la surface desdites fenêtres latérales (17).

10. Conduits d'aération selon la revendication 1, caractérisés en ce que la section dudit conduit (20) le long dudit montant (13) est essentiellement en forme d'arc de cercle.

11. Conduits d'aération selon la revendication 1, caractérisés en ce que la section dudit conduit (20) le long de ladite section de bord de panneau de toit (19) est sensiblement de forme rectangulaire.
